# EUROPEAN PATENT APPLICATION

(11) **EP 4 722 998 A1**
(43) Date of publication of application: **08.04.2026**
(21) Application number: 23939732.6
(22) Date of filing: 02.06.2023

(54) **INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: SUGA, Akito, Tokyo 108-8001 (JP); KITADA, Masato, Tokyo 108-8001 (JP); SATO, Kensaku, Tokyo 108-8001 (JP)
(74) Representative: Betten & Resch
(86) International application number: PCT/JP2023/020678
(87) International publication number: WO 2024/247260

(57) **Abstract**

An information processing system includes: a first image acquisition unit that acquires a first image including a biometric authentication area, which is set at a station where one platform is used by a first train equipped with a special car requiring a special fee and a second train not requiring the special fee; a first biometric authentication unit that performs biometric authentication on an authentication subject included in the first image, based on the first image; and a first determination unit that determines whether or not the authentication subject is permitted to board the special car, based on information related to a registrant corresponding to the authentication subject who is identified by the first biometric authentication unit performing the biometric authentication.

## Description

### Technical Field

The present disclosure relates to technical fields of an information processing system, an information processing method, and a recording medium.

### Background Art

As this type of system, for example, there is proposed an apparatus that acquires a first facial image of a user when ticket information is issued to the user of a railway, that acquires a second facial image of the user when the user passes through a ticket gate, that compares the first facial image and the second facial image, and that permits the user to pass through when the first and second facial images match (see Patent Literature 1). Other prior art documents related to this disclosure include Patent Literatures 2 and 3.

### Citation List

### Patent Literature

[Patent Literature 1] JP2012-079157A
[Patent Literature 2] JP2013-191172A
[Patent Literature 3] WO2020/240801A1

### Summary

### Technical Problem

It is an example object of the present disclosure to provide an information processing system, an information processing method, and a recording medium that aim to improve the techniques/technologies disclosed in Citation List.

### Solution to Problem

An information processing system according to an example aspect includes: a first image acquisition unit that acquires a first image including a biometric authentication area, which is set at a station where one platform is used by a first train equipped with a special car requiring a special fee and a second train not requiring the special fee; a first biometric authentication unit that performs biometric authentication on an authentication subject included in the first image, based on the first image; and a first determination unit that determines whether or not the authentication subject is permitted to board the special car, based on information related to a registrant corresponding to the authentication subject who is identified by the first biometric authentication unit performing the biometric authentication.

An information processing method according to an example aspect includes: acquiring a first image including a biometric authentication area, which is set at a station where one platform is used by a first train equipped with a special car requiring a special fee and a second train not requiring the special fee; performing biometric authentication on an authentication subject included in the first image, based on the first image; and determining whether or not the authentication subject is permitted to board the special car, based on information related to a registrant corresponding to the authentication subject who is identified by the biometric authentication being performed.

A recording medium according to an example aspect is a recording medium on which a computer program that allows a computer to execute an information processing method is recorded, the information processing method including: acquiring a first image including a biometric authentication area, which is set at a station where one platform is used by a first train equipped with a special car requiring a special fee and a second train not requiring the special fee; performing biometric authentication on an authentication subject included in the first image, based on the first image; and determining whether or not the authentication subject is permitted to board the special car, based on information related to a registrant corresponding to the authentication subject who is identified by the biometric authentication being performed.

### Brief Description of Drawings

[FIG. 1] FIG. 1 is a diagram illustrating an example of a station platform.
[FIG. 2] FIG. 2 is a block diagram illustrating an example of an information processing apparatus.
[FIG. 3] FIG. 3 is a flowchart illustrating operation of an information processing apparatus according to a first example embodiment.
[FIG. 4] FIG. 4 is a block diagram illustrating an example of an information processing system.
[FIG. 5] FIG. 5 is a diagram illustrating an example of a facial information database.
[FIG. 6] FIG. 6 is a block diagram illustrating another example of the information processing apparatus.
[FIG. 7] FIG. 7 is a diagram for explaining tracking processing of tracking a person.
[FIG. 8] FIG. 8 is a diagram illustrating an example of an ID correspondence table.
[FIG. 9] FIG. 9 is a diagram illustrating an example of a train.
[FIG. 10] FIG. 10 is a block diagram illustrating another example of the information processing apparatus.
[FIG. 11] FIG. 11 is a diagram illustrating another example of the station platform.

### Description of Example Embodiments

### <First Example Embodiment>

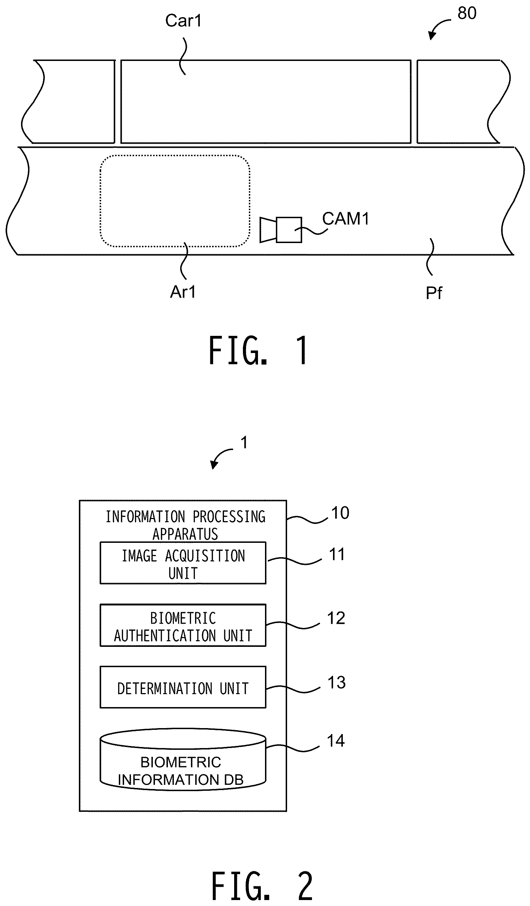

An information processing system, an information processing method, and a recording medium according to a first example embodiment will be described with reference to FIG. 1 to FIG. 3. The following describes the information processing system, the information processing method, and the recording medium according to the first example embodiment, by using an information processing system 1.

With reference to FIG. 1, a description will be given of a station to which the information processing system 1 is applied. This station is a station where one platform Pf is shared by a first train equipped with a special car requiring a special fee and a second train not requiring a special fee (in other words, a train that may be boarded with just a basic fare). Note that the "station" is not limited to a station for railway vehicles traveling on rails, but also conceptually includes, for example, a station for linear motor cars (e.g., superconducting magnetic levitation trains). The first train may be a train in which all cars in a train formation are special cars, or a train in which only a part of the cars in the train formation is a special car(s). That is, the first train is a train equipped with at least one special car. "One platform Pf is shared by the first train and the second train" means that the platform Pf is used for passengers boarding and alighting from the first train and for passengers boarding and alighting from the second train. That is, the first train is allowed to stop at the platform Pf, and the second train is also allowed to stop at the platform Pf. For example, the first train may stop on one side of the platform Pf, while the second train may stop on the other side of the platform Pf. For example, the first train may stop on one side of the platform Pf at a first time, while the second train may stop on the same side of the platform Pf at a second time that is different from the first time.

In FIG. 1, a train 80 is a train equipped with a special car Carl. That is, the train 80 corresponds to an example of the aforementioned first train. On the platform Pf, a biometric authentication area Ar1 is set at a scheduled stop position of the special car Carl. Note that the biometric authentication area Ar1 is a virtual area. Therefore, for example, any markings or the like indicating the biometric authentication area Ar1 may not be drawn on the platform Pf. However, for example, markings or the like indicating the biometric authentication area Ar1 may be drawn on the platform Pf. Note that the shape, size, and setting position of the biometric authentication area Ar1 illustrated in FIG. 1 are examples and are not limited thereto.

A camera CAM1 is installed/positioned to capture images of the biometric authentication area Ar1. The camera CAM1 may not be positioned such that the entire biometric authentication area Ar1 is included within its angle of view. In other words, the camera CAM1 may be positioned to capture images of at least a part of the biometric authentication area Ar1. The camera CAM1 may be installed at a position that does not obstruct the transit/passage of station users (e.g., at a position higher than users' heads). The camera CAM1 may be a high-resolution camera, such as a 4K resolution camera. The platform Pf may additionally include another camera that is configured to capture images of the biometric authentication area Ar1, in addition to the camera CAM1.

The information processing system 1 includes an information processing apparatus 10. The information processing system 1 may also include the camera CAM1, in addition to the information processing apparatus 10. The camera CAM1 may be connected to the information processing apparatus 10 via a cable or by using a wireless communication technology.

With reference to FIG. 2, the information processing apparatus 10 will be described. In FIG. 2, the information processing apparatus 10 includes an image acquisition unit 11, a biometric authentication unit 12, a determination unit 13, and a biometric information database 14. Hereinafter, the biometric information database 14 will be referred to as a "biometric information DB 14" as appropriate.

The image acquisition unit 11 acquires an image including the biometric authentication area Ar1, which is generated by the camera CAM1 capturing the biometric authentication area Ar1.

The biometric authentication unit 12 performs biometric authentication on a person included in the image (hereinafter referred to as an "authentication subject"), based on the image acquired by the image acquisition unit 11. The biometric authentication unit 12 may perform at least one of facial recognition and iris recognition, as the biometric authentication based on the image. Note that various existing aspects such as, for example, a two-dimensional (2D) authentication method or three-dimensional (3D) authentication method, may be applicable to the facial recognition. Similarly, various existing aspects may be applicable to the iris recognition. An example of processing related to the facial recognition will be described below.

The biometric authentication unit 12 may detect a face of the authentication subject included in the image. The biometric authentication unit 12 may calculate facial feature quantities indicating features of the detected face. The biometric authentication unit 12 may identify a registrant corresponding to the authentication subject, by using the calculated facial feature quantities and the biometric information DB 14.

The biometric authentication unit 12 may calculate a matching score from the calculated facial feature quantities (i.e., facial feature quantities related to the face of the authentication subject) and facial feature quantities based on facial information on a single registrant registered in the biometric information DB 14. In a case where the calculated matching score is greater than a predetermined threshold, the biometric authentication unit 12 may determine that the single registrant is a registrant corresponding to the authentication subject.

In a case where the calculated matching score is less than the predetermined threshold, the biometric authentication unit 12 may calculate a matching score from the calculated facial feature quantities and facial feature quantities based on facial information on another registrant registered in the biometric information DB 14. In this case, the biometric authentication unit 12 may determine that the single registrant is not the registrant corresponding to the authentication subject. In a case where the calculated matching score is "equal" to the predetermined threshold, it may be included in one of the cases.

An example of processing related to the iris recognition will be described below. The biometric authentication unit 12 may detect an eye of the authentication subject included in the image. The biometric authentication unit 12 may calculate iris feature quantities indicating features of the iris included in the detected eye. The biometric authentication unit 12 may identify the registrant corresponding to the authentication subject, by using the calculated iris feature quantities and the biometric information DB 14.

The biometric authentication unit 12 may calculate a matching score from the calculated iris feature quantities (i.e., the iris feature quantities related to the iris of the authentication subject) and the iris feature quantities based on iris information on a registrant registered in the biometric information DB 14. In a case where the calculated matching score is greater than a predetermined threshold, the biometric authentication unit 12 may determine that the single registrant is a registrant corresponding to the authentication subject.

In a case where the calculated matching score is less than the predetermined threshold, the biometric authentication unit 12 may calculate a matching score from the calculated iris feature quantities and iris feature quantities based on iris information on another registrant registered in the biometric information DB 14. In this case, the biometric authentication unit 12 may determine that the single registrant is not the registrant corresponding to the authentication subject. In a case where the calculated matching score is "equal" to the predetermined threshold, it may be included in one of the cases.

The determination unit 13 acquires information related to the registrant identified by the biometric authentication unit 12, from the biometric information DB 14. Here, information related to a single registrant registered in the biometric information DB 14 includes: information for identifying the single registrant (e.g., an "authentication ID" described later); and biometric feature quantities (e.g., at least one of the facial feature quantities and the iris feature quantities) indicating features of a biological part (e.g., at least one of the face and the iris) of the single registrant. The information related to a single registrant may further include ticket issuance information related to a ticket (e.g., a limited express train ticket, a green car ticket, a reserved seat ticket, etc.) for using a special car requiring a special fee (e.g., the special car Car 1). The information related to a single registrant may further include amount information indicating an amount of money that may be used to pay a railway usage fee including a special fee and indicating an amount of money that is deposited in advance (a so-called charge amount).

In the following description, the "ticket for using a special car" will be referred to as a "limited express train ticket" for convenience. The ticket issuance information is information related to the ticket for using a special car (e.g., a limited express train ticket), that is, a ticket for boarding a special car. Therefore, the ticket issuance information may also be referred to as ticket information. Note that information related to a limited express train ticket may include, for example, at least one of a train name, a departure time, a car number, and a seat number.

The determination unit 13 determines whether or not the authentication subject (i.e., the authentication subject corresponding to the identified registrant) is permitted to board a special car (e.g., the special car Car 1), based on the information related to the registrant identified by the biometric authentication unit 12.

For example, in a case where the information related to the registrant includes the ticket issuance information, the determination unit 13 may determine whether or not the authentication subject is permitted to board the special car Car 1, based on the ticket issuance information. For example, in a case where the ticket issuance information indicates information related to a limited express train ticket for using the special car Car 1, the determination unit 13 may determine that the authentication subject is permitted to board the special car Car 1. On the other hand, in a case where the ticket issuance information indicates information related to a limited express train ticket that is different from the one for using the special car Carl, or in a case where the ticket issuance information indicates that the authentication subject does not have a limited express train ticket, the determination unit 13 may determine that the authentication subject is not permitted to board the special car Carl. Thus, the use of the ticket issuance information makes it possible to easily determine whether or not the authentication subject is permitted to board the special car Carl.

For example, in a case where the special car Carl is a non-reserved seat car (i.e., a car without reserved seats), a larger number of people than the number of seats in the special car Carl can board the special car Carl as long as they pay the special fee. For instance, in a case where the information related to the registrant includes the amount information, the determination unit 13 may determine whether or not the authentication subject is permitted to board the special car Carl, based on the amount information. For example, in a case where the amount of money indicated by the amount information is greater than or equal to the special fee, the determination unit 13 may determine that the authentication subject is permitted to board the special car Car 1. In a case where the special fee varies depending on a boarding section of the special car, the determination unit 13 may determine that the authentication subject is permitted to board the special car Car 1 when the amount of money indicated by the amount information is greater than or equal to the minimum amount of the special fee. On the other hand, in a case where the amount of money indicated by the amount information is less than the special fee, the determination unit 13 may determine that the authentication subject is not permitted to board the special car Carl. Thus, the use of the amount information makes it possible to easily determine whether or not the authentication subject is permitted to board the special car Carl.

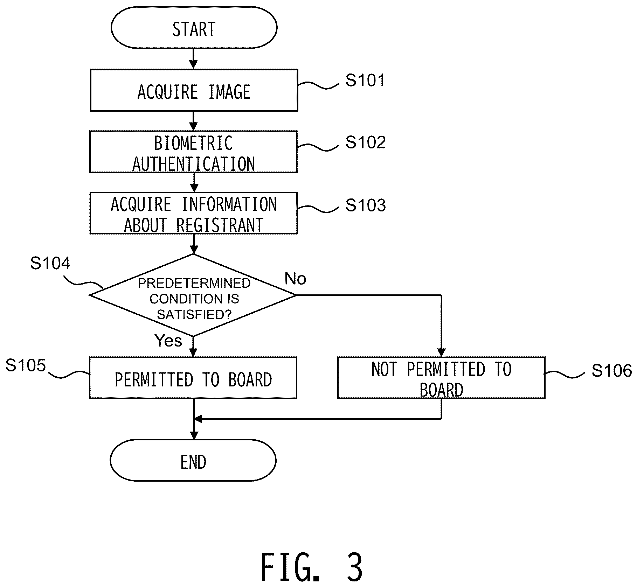

The operation of the information processing apparatus 10 will be described with reference to a flowchart in FIG. 3. In FIG. 3, the image acquisition unit 11 acquires the image including the biometric authentication areaAr1 (step S101). The biometric authentication unit 12 performs the biometric authentication on the authentication subject included in the image acquired in the step S101 (step S102).

The determination unit 13 acquires the information related to the registrant corresponding to the authentication subject identified by the biometric authentication unit 12, from the biometric information DB 14 (step S103). The determination unit 13 determines whether or not the authentication subject (in other words, the registrant) satisfies a predetermined condition, based on the information related to the registrant acquired in the step S103 (step S104).

In the step S104, the determination unit 13 may, for example, determine whether or not the information related to a limited express train ticket, indicated by the ticket issuance information included in the information related to the registrant, indicates one special car (e.g., the special car Carl). In this case, "the information related to a limited express train ticket indicates a single special car" corresponds to an example of the predetermined condition.

In the step S104, the determination unit 13 may, for example, determine whether or not the amount of money indicated by the amount information included in the information related to the registrant is greater than or equal to the special fee for using one special car (e.g., the special car Carl). In this case, "the amount of money indicated by the amount information is greater than or equal to the special fee for using one special car" corresponds to an example of the predetermined condition.

In the step S104, in a case where it is determined that the predetermined condition is satisfied (step S104: Yes), the determination unit 13 determines that the authentication subject is permitted to board the special car (step S105). In a case where the predetermined condition is not satisfied in the step S104 (step S104: No), the determination unit 13 determines that the authentication subject is not permitted to board the special car (step S106). In this case, the information processing system 1 may notify the authentication subject that he/she is not permitted to board the special car, by using at least one of voice/audio and image display. For example, the information processing system 1 may further guide the authentication subject through necessary procedures for boarding the special car (e.g., purchasing a limited express train ticket, increasing a so-called charge amount). For example, the information processing system 1 may issue an alert to a predetermined person, such as a station staff. In this case, the information processing system 1 may present an image (e.g., a facial image) indicating the authentication subject who is not permitted to board the special car, to the predetermined person. For example, the information processing system 1 may transmit, to the special car, an instruction signal for giving an instruction to close doors of the special car (and furthermore, to lock the closed doors) such that the authentication subject who is determined to be not permitted to board the special car, cannot board the special car.

As described above, performed in the information processing system 1 is an information processing method including: acquiring a first image including a biometric authentication area (e.g., the biometric authentication area Ar1), which is set at a station where one platform (e.g., the platform Pf) is used by a first train (e.g., the train 80) equipped with a special car (e.g., the special car Carl) requiring a special fee and a second train not requiring the special fee; performing biometric authentication on an authentication subject included in the first image, based on the first image; and determining whether or not the authentication subject is permitted to board the special car, based on information related to a registrant corresponding to the authentication subject who is identified by the biometric authentication being performed.

The information processing apparatus 10 of the information processing system 1 may be realized by a computer reading a computer program recorded on a recording medium. In this case, it can be said that a computer program that allows a computer to execute an information processing method is recorded on a recording medium, the information processing method including: acquiring a first image including a biometric authentication area, which is set at a station where one platform is used by a first train equipped with a special car requiring a special fee and a second train not requiring the special fee; performing biometric authentication on an authentication subject included in the first image, based on the first image; and determining whether or not the authentication subject is permitted to board the special car, based on information related to a registrant corresponding to the authentication subject who is identified by the biometric authentication being performed.

### (Technical Effect)

In a case where one platform (e.g., the platform Pf) is shared by the first train (e.g., the train 80) equipped with a special car requiring a special fee (e.g., the special car Carl) and the second train not requiring a special fee, there may be users of the special car and users of cars other than the special car, simultaneously, at the one platform.

In this case, for example, at the one platform, such an action may be taken that a station staff identifies users who are permitted to board one special car by confirming limited express train tickets for the one special car. However, this may increase a boarding/alighting time for the special car (in other words, a time in which the train equipped with the special car occupies the platform). Additionally, it may increase a burden on the station staff.

In contrast, in the information processing system 1, it is determined whether or not the authentication subject is permitted to board the special car (e.g., the special car Carl), based on the information related to the registrant corresponding to the authentication subject identified by the biometric authentication. That is, according to the information processing system 1, it is possible to identify the users who are permitted to board the special car, even if there is no station staff at the one platform (e.g., the platform Pf). Therefore, according to the information processing system 1, it is possible to prevent/control an increase in the boarding/alighting time for the special car. In addition, it is possible to reduce a burden on at least one of the station staff and the users of the special car.

Furthermore, according to the information processing system 1, it is possible to prevent users having no limited express train tickets, from negligently or intentionally boarding the special car. Consequently, according to the information processing system 1, it is possible to appropriately collect the special fee from the users of the special car.

### <Second Example Embodiment>

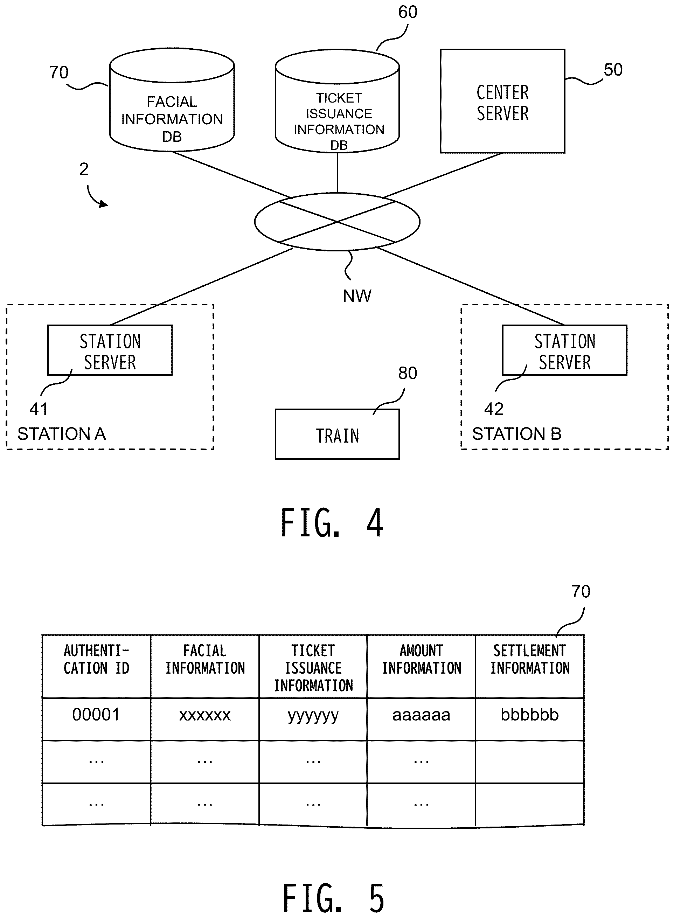

An information processing system, an information processing method, and a recording medium according to a second example embodiment will be described with reference to FIG. 4 to FIG. 8. The following describes the information processing system, the information processing method, and the recording medium according to the second example embodiment, by using an information processing system 2. In the second example embodiment, a description that overlaps with that of the first example embodiment is omitted as appropriate. In the second example embodiment, the facial recognition is described as an example of the biometric authentication. However, in the second example embodiment, the iris recognition may be performed instead of the facial recognition. Alternatively, in the second example embodiment, the facial recognition and the iris recognition may be performed (i.e., multimodal biometric authentication may be performed).

### (Overview of Information Processing System)

An overview of the information processing system 2 will be described with reference to FIG. 4. In FIG. 4, the information processing system 2 includes: a station server 41 installed at a station A; a station server 42 installed at a station B; a center server 50; a ticket issuance information database 60; and a facial information database 70. The ticket issuance information database 60 will be hereinafter referred to as a "ticket issuance information DB 60" as appropriate. The facial information database 70 will be hereinafter referred to as a "facial information DB 70" as appropriate.

The station servers 41 and 42, the center server 50, the ticket issuance information DB 60, and the facial information DB 70 are connected via a network NW. The network NW is, for example, a wide area network such as the Internet.

The station server 41 may acquire information indicating that a user of a railway (which may include a linear motor car) has entered the station A. For example, in a case where a ticket gate apparatus (e.g., an automatic ticket gate) for which at least one of an IC (Integrated Circuit) ticket and a mobile ticket is usable, is installed at the station A, the station server 41 may acquire, from the ticket gate apparatus, information indicating that a user holding an IC ticket or mobile ticket has entered the station A. In this case, the station server 41 may link identification information related to the IC ticket or mobile ticket, with the information indicating that the user has entered the station A, and may transmit the linked information to the center server 50. In a case where an authentication apparatus that detects the user's entry/exit by using biometric authentication (e.g., facial recognition, iris recognition, etc.) is installed at the station A, the station server 41 may acquire, from the authentication apparatus, information indicating that a user (in other words, an authentication subject) has entered the station A. In this case, the station server 41 may link identification information related to the user, with the information indicating that the user has entered the station A, and may transmit the linked information to the center server 50.

The station server 41 may acquire information indicating that a railway user has exited from the station A. For example, in a case where a ticket gate apparatus for which at least one of an IC ticket and a mobile ticket is usable, is installed at the station A, the station server 41 may acquire, from the ticket gate apparatus, information indicating that a user holding an IC ticket or mobile ticket has exited from the station A. In this case, the station server 41 may link identification information related to the IC ticket or mobile ticket, with the information indicating that the user has exited from the station A, and may transmit the linked information to the center server 50. In a case where an authentication apparatus that detects the user's entry/exit by using biometric authentication is installed at the station A, the station server 41 may acquire, from the authentication apparatus, information indicating that a user (in other words, an authentication subject) has exited from the station A. In this case, the station server 41 may link identification information related to the user, with the information indicating that the user has exited from the station A, and may transmit the linked information to the center server 50.

The station server 42 may acquire information indicating that a railway user has entered the station B. For example, in a case where a ticket gate apparatus for which at least one of an IC ticket and a mobile ticket is usable, is installed at the station B, the station server 42 may acquire, from the ticket gate apparatus, information indicating that a user holding an IC ticket or mobile ticket has entered the station B. In this case, the station server 42 may link identification information related to the IC ticket or mobile ticket, with the information indicating that the user has entered the station B, and may transmit the linked information to the center server 50. In a case where an authentication apparatus that detects the user's entry/exit by using biometric authentication is installed at the station B, the station server 42 may acquire, from the authentication apparatus, information indicating that a user (in other words, an authentication subject) has entered the station B. In this case, the station server 42 may link identification information related to the user, with the information indicating that the user has entered the station B, and may transmit the linked information to the center server 50.

The station server 42 may acquire information indicating that a railway user has exited from the station B. For example, in a case where a ticket gate apparatus for which at least one of an IC ticket and a mobile ticket is usable, is installed at the station B, the station server 42 may acquire, from the ticket gate apparatus, information indicating that a user holding an IC ticket or mobile ticket has exited from the station B. In this case, the station server 42 may link identification information related to the IC ticket or mobile ticket, with the information indicating that the user has exited from the station B, and may transmit the linked information to the center server 50. In a case where an authentication apparatus that detects the user's entry/exit by using biometric authentication is installed at the station B, the station server 42 may acquire, from the authentication apparatus, information indicating that a user (in other words, an authentication subject) has exited from the station B. In this case, the station server 42 may link identification information related to the user, with the information indicating that the user has exited from the station B, and may transmit the linked information to the center server 50.

For example, let us assume that one user enters the station A, travels by train (e.g. the train 80) from the station A to the station B, and exits from the station B. In this case, the center server 50 may register the one user's entry to the station A and exit from the station B. The center server 50 may calculate a railway usage fee (e.g., a fare) from the station A to the station B. The center server 50 may settle the calculated railway usage fee by using settlement/payment information related to the one user. The settlement information is information related to a payment method. The payment method may be, for example, at least one of a credit card, a debit card, a prepaid card, and an electronic money. The information related to the payment method may be, for example, at least one of credit card information, debit card information, prepaid card information, IC card information, and account information.

The ticket issuance information DB 60 registers/stores the ticket issuance information related to a limited express train ticket. For example, in a case where a limited express train ticket vending machine is installed at the station A, the station server 41 may display vacant seat information on a screen of the ticket vending machine with reference to the ticket issuance information DB 60. In a case where a limited express train ticket is issued by the ticket vending machine, the station server 41 may acquire information related to the limited express train ticket issued from the ticket vending machine (e.g., train name, departure time, car number, seat number, settlement information, etc.). The station server 41 may transmit the acquired information related to the limited express train ticket to the center server 50. The center server 50 may update registration content of the ticket issuance information DB 60, based on the information related to the limited express train ticket transmitted from the station server 41.

For example, in a case where a limited express train ticket vending machine is installed at the station B, the station server 42 may display vacant seat information on a screen of the ticket vending machine with reference to the ticket issuance information DB 60. In a case where a limited express train ticket is issued by the ticket vending machine, the station server 42 may acquire information related to the limited express train ticket issued from the ticket vending machine. The station server 42 may transmit the acquired information related to the limited express train ticket to the center server 50. The center server 50 may update registration content of the ticket issuance information DB 60, based on the information related to the limited express train ticket transmitted from the station server 42.

The facial information DB 70 registers/stores information related to those wishing to use the information processing system 2. Among those wishing to use the information processing system 2, a person whose information is registered in the facial information DB 70 is referred to as a "registrant" as appropriate. The facial information DB 70 registers/stores authentication IDs serving as identification information for respectively identifying/distinguishing a plurality of registrants. Information related to each of the plurality of registrants is linked to the corresponding authentication ID and is registered in the facial information DB 70.

Here, the facial information DB 70 will be described with reference to FIG. 5. As illustrated in FIG. 5, facial information, ticket issuance information, amount information, and settlement information may be linked to the authentication ID of a single registrant. Note that one of the ticket issuance information and the amount information may not be linked to the authentication ID of a single registrant. That is, the facial information DB 70 may not include one of the ticket issuance information and the amount information. In other words, the facial information DB 70 may include at least one of the ticket issuance information and the amount information.

The facial information may be, for example, feature quantities themselves indicating facial features of the single registrant, or information (e.g., a file name) for identifying the feature quantities. Alternatively, the facial information may be, for example, a facial image itself including a face of the single registrant, or information (e.g., a file name) for identifying the facial image. The ticket issuance information is information related to a limited express train ticket. That is, the ticket issuance information is information corresponding to the ticket issuance information registered in the ticket issuance information DB 60. The amount information is information indicating an amount of money that may be used to pay a railway usage fee including a special fee and indicating an amount of money that is deposited in advance (a so-called charge amount).

The settlement information is information related to a payment method as described above. In a case where the ticket issuance information is included in the facial information DB 70, the settlement information may include information related to a payment method that is usable to purchase a limited express train ticket. In a case where the amount information is included in the facial information DB 70, the settlement information may include information related to a payment method that is usable to deposit money.

For example, in a case where a ticket vending machine is installed at the station A and a limited express train ticket is issued by the ticket vending machine, the station server 41 may acquire information related to the limited express train ticket issued by the ticket vending machine (e.g., train name, departure time, car number, seat number, settlement information, etc.). The station server 41 may transmit the acquired information related to the limited express train ticket to the center server 50. The center server 50 may identify a registrant having purchased the limited express train ticket, based on the settlement information included in the information related to the limited express train ticket transmitted from the station server 41 and the settlement information registered in the facial information DB 70. The center server 50 may link the ticket issuance information to the authentication ID of the identified registrant, based on the information related to the limited express train ticket transmitted from the station server 41 (i.e., may register the ticket issuance information in the facial information DB 70).

For example, in a case where a ticket vending machine is installed at the station B and a limited express train ticket is issued by the ticket vending machine, the station server 42 may acquire information related to the limited express train ticket issued by the ticket vending machine (e.g., train name, departure time, car number, seat number, settlement information, etc.). The station server 42 may transmit the acquired information related to the limited express train ticket to the center server 50. The center server 50 may identify a registrant having purchased the limited express train ticket, based on the settlement information included in the information related to the limited express train ticket transmitted from the station server 42 and the settlement information registered in the facial information DB 70. The center server 50 may link the ticket issuance information to the authentication ID of the identified registrant, based on the information related to the limited express train ticket transmitted from the station server 42 (i.e., may register the ticket issuance information in the facial information DB 70).

The information processing system 2 may include, for example, an information processing apparatus 20 installed at the station A. The information processing apparatus 20 may be connected to the station server 41 via a narrow area network such as, for example, a local area network (LAN). Note that an information processing apparatus similar to the information processing apparatus 20 may also be installed at the station B, for example.

### (Configuration of Information Processing Apparatus)

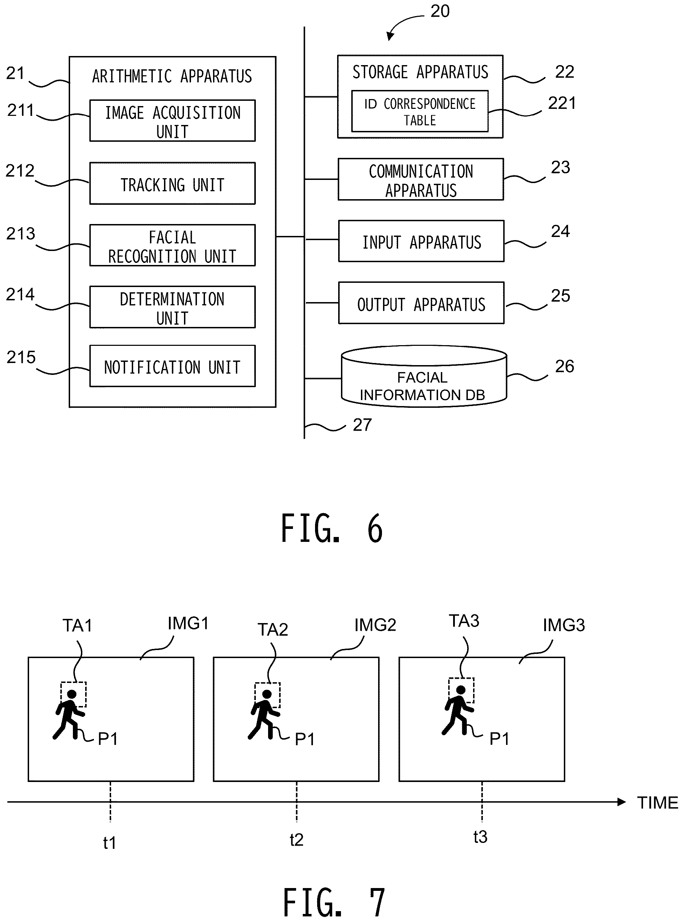

In FIG. 6, the information processing apparatus 20 includes an arithmetic apparatus 21, a storage apparatus 22, and a communication apparatus 23. The information processing apparatus 20 may further include an input apparatus 24 and an output apparatus 25. The information processing apparatus 20 may include a facial information database 26 (hereinafter referred to as a "facial information DB 26" as appropriate). The information processing apparatus 20 may not include at least one of the input apparatus 24 and the output apparatus 25. In the information processing apparatus 20, the arithmetic apparatus 21, the storage apparatus 22, the communication apparatus 23, the input apparatus 24, the output apparatus 25, and the facial information DB 26 may be connected via a data bus 27.

Incidentally, the facial information DB 26 may register/store the same information as that registered in the facial information DB 70. The facial information DB 26 may be updated at predetermined intervals to ensure that the information registered in the facial information DB 26 is the same as that registered in the facial information DB 70.

The arithmetic apparatus 21 may include, for example, at least one of a CPU (Central Processing Unit), a GPU (Graphics Processing Unit), an FPGA (Field Programmable Gate Array), a TPU (Tensor Processing Unit), and a quantum processor.

The storage apparatus 22 may include, for example, at least one of a RAM (Random Access Memory), a ROM (Read-Only Memory), a hard disk apparatus, a magneto-optical disk apparatus, an SSD (Solid State Drive), and an optical disk array. That is, the storage apparatus 22 may include a non-transitory recording medium. The storage apparatus 22 is configured to store desired data. For example, the storage apparatus 22 may temporarily store a computer program to be executed by the arithmetic apparatus 21. The storage apparatus 22 may temporarily store data that are temporarily used by the arithmetic apparatus 21 when the arithmetic apparatus 21 executes the computer program.

The communication apparatus 23 may be configured to communicate with an apparatus external to the information processing apparatus 20. The communication apparatus 23 may perform wired communication or wireless communication.

The input apparatus 24 is an apparatus that is configured to receive an input of information to the information processing apparatus 20 from an external source. The input apparatus 24 may include an operating apparatus (e.g., a keyboard, a mouse, a touch panel, etc.) that is operable by an operator of the information processing apparatus 20. The input apparatus 24 may include a recording medium reading apparatus that is configured to read information recorded on a recording medium that is attachable to or detachable from the information processing apparatus 20, such as, for example, a USB (Universal Serial Bus) memory. In a case where information is inputted to the information processing apparatus 20 via the communication apparatus 23 (in other words, in a case where the information processing apparatus 20 acquires information via the communication apparatus 23), the communication apparatus 23 may function as an input apparatus.

The output apparatus 25 is an apparatus that is configured to output information to the outside of the information processing apparatus 20. The output apparatus 25 may output visual information such as characters and images, may output auditory information such as voice, or may output tactile information such as vibration, as the aforementioned information. The output apparatus 25 may include, for example, at least one of a display, a speaker, a printer, and a vibration motor. The output apparatus 25 may be configured to output information to a recording medium that is attachable to or detachable from the information processing apparatus 20, such as, for example, a USB memory. In a case where the information processing apparatus 20 outputs information via the communication apparatus 23, the communication apparatus 23 may function as an output apparatus.

The arithmetic apparatus 21 may include an image acquisition unit 211, a tracking unit 212, a facial recognition unit 213, a determination unit 214, and a notification unit 215, as function blocks realized logically or as processing circuits realized physically.

At least one of the image acquisition unit 211, the tracking unit 212, the facial recognition unit 213, the determination unit 214, and the notification unit 215 may be realized in a form in which logical function blocks and physical processing circuits (i.e., hardware) are mixed. In a case where at least a part of the image acquisition unit 211, the tracking unit 212, the facial recognition unit 213, the determination unit 214, and the notification unit 215 is a function block, the at least a part of the image acquisition unit 211, the tracking unit 212, the facial recognition unit 213, the determination unit 214, and the notification unit 215 may be realized by the arithmetic apparatus 21 executing a predetermined computer program.

The arithmetic apparatus 21 may acquire (in other words, read) the predetermined computer program from the storage apparatus 22. The arithmetic apparatus 21 may also read the predetermined computer program stored on a computer-readable, non-transitory recording medium, by using a not-illustrated recording medium reading apparatus provided in the information processing apparatus 20. The arithmetic apparatus 21 may acquire (in other words, may download or read) the predetermined computer program from a not-illustrated apparatus external to the information processing apparatus 20 via the communication apparatus 23. As the recording medium that records therein the predetermined computer program to be executed by the arithmetic apparatus 21, at least one of an optical disk, a magnetic medium, a magneto-optical disk, a semiconductor memory, and any other medium configured to store a program may be used.

The "image acquisition unit 211," the "facial recognition unit 213," the "determination unit 214," and the "facial information DB 26" are components corresponding to the "image acquisition unit 11," the "biometric authentication unit 12," the "determination unit 13," and the "biometric information DB 14" described in the first example embodiment above, respectively.

### (Operation of Information Processing Apparatus)

The station A may be equipped with the platform Pf illustrated in FIG. 1. The platform Pf is shared by the first train equipped with a special car requiring a special fee and the second train not requiring a special fee (in other words, a train that may be boarded with just a basic fare). On the platform Pf, the biometric authentication area Ar1 is set at a scheduled stop position of the special car Carl of the train 80.

The information processing apparatus 20 performs facial recognition on the authentication subjects, based on images captured by the camera CAM1 (i.e., images including the biometric authentication area Ar1). The information processing apparatus 20 may perform the facial recognition on the authentication subjects while the authentication subjects are passing through the biometric authentication area Ar1. That is, the information processing apparatus 20 may be an apparatus that allows walk-through facial recognition.

The image acquisition unit 211 acquires an image(s) including the biometric authentication area Ar1, which is captured by the camera CAM1. The tracking unit 212 performs tracking processing on one or more authentication subjects (in other words, users of the station A) passing through the biometric authentication area Ar1, by using the image(s) acquired by the image acquisition unit 211. Furthermore, the facial recognition unit 213 performs facial recognition processing on one or more authentication subjects passing through the biometric authentication area Ar1, by using the image(s)acquired by the image acquisition unit 211.

As a specific example of the tracking processing performed by the tracking unit 212, a case where the tracking unit 212 performs the tracking processing on a person P1 passing through the biometric authentication area Ar1 will be described with reference to FIG. 7. Furthermore, as a specific example of the facial recognition processing performed by the facial recognition unit 213, a case where the facial recognition unit 213 performs the facial recognition processing on the person P1.

Images IMG1, IMG2, and IMG3 illustrated in FIG. 7 are images including the person P1 corresponding to the authentication subject (in other words, images in which the person P1 is captured). Th image IMG1 is an image generated by the camera CAM1 capturing the biometric authentication area Ar1 at a time t1. The image IMG2 is an image generated by the camera CAM1 capturing the biometric authentication area Ar1 at a time t2, which is later than the time t1. The image IMG3 is an image generated by the camera CAM1 capturing the biometric authentication area Ar1 at a time t3, which is later than the time t2.

Each of the images IMG1, IMG2, and IMG3 may correspond to a single frame of a video. In this case, the image IMG2 may not correspond to a frame immediately after a frame corresponding to the image IMG1. That is, the image IMG2 may correspond to a frame that is two or more frames later than the frame corresponding to the image IMG1. Similarly, the image IMG3 may not correspond to a frame immediately after the frame corresponding to the image IMG2. That is, the image IMG3 may correspond to a frame that is two or more frames later than the frame corresponding to the image IMG2.

The tracking unit 212 detects, from the image IMG1, a head of the person P1 included in the image IMG1. Since existing techniques/technologies are applicable to a method of detecting a human head from an image, a detailed description of the method is omitted. Based on the detected head of the person P1, the tracking unit 212 sets an area including the head of the person P1 as a tracking area TA1.

In a case where the tracking area TA1 is set, the tracking unit 212 sets or assigns a tracking ID, which is identification information for identifying the person P1 related to the tracking area TA1, to the person P1. The tracking unit 212 calculates a position of the person P1 (e.g., a position at the feet of the person P1) based on the tracking area TA1. Since existing techniques/technologies are applicable to a method of calculating, from an image, the position of a subject included in the image, a detailed description of the method is omitted. The tracking unit 212 links the tracking ID with the position of the person P1 and registers it in an ID correspondence table 221 stored in the storage apparatus 22.

In a case where the tracking area TA1 is set, the tracking unit 212 determines whether or not a face of the person P1 is captured in the tracking area TA1. In other words, the tracking unit 212 performs face detection on the tracking area TA1. In a case where it is determined that the face of the person P1 is captured in the tracking area TA1, the tracking unit 212 generates a facial image including a face area of the person P1. The tracking unit 212 links the generated facial image with the tracking ID of the person P1 and transmits it to the facial recognition unit 213. In a case where it is determined that the face of the person P1 is not captured in the tracking area TA1, the tracking unit 212 may not generate a facial image.

The facial recognition unit 213 performs the facial recognition processing by using the facial image transmitted from the tracking unit 212. For example, the facial recognition unit 213 may calculate facial feature quantities indicating the features of the face of the person P1 from the aforementioned facial image. The facial recognition unit 213 may calculate a matching score from the calculated facial feature quantities and from facial feature quantities based on the facial information on a single registrant stored in the facial information DB 26.

In a case where the calculated matching score is greater than a predetermined threshold, the facial recognition unit 213 determines that the facial recognition is successful. In this case, a single registrant corresponding to a person (here, the person P1) indicated by the facial image transmitted from the tracking unit 212 is identified from among a plurality of registrants registered in the facial information DB 26. On the other hand, in a case where the calculated matching score is less than the predetermined threshold, the facial recognition unit 213 determines that the facial recognition is failed. In this case, it is highly likely that a person corresponding to the person (here, the person P1) indicated by the facial image transmitted from the tracking unit 212 is not registered in the facial information DB 26. In a case where the calculated matching score is "equal" to the predetermined threshold, it may be included in one of the cases.

In a case where the facial recognition is successful, the facial recognition unit 213 links the authentication ID indicating the registrant registered in the facial information DB 26 corresponding to the person (here, the person P1) indicated by the facial image transmitted from the tracking unit 212, to the tracking ID linked to the facial image described above, and registers it in the ID correspondence table 221. In addition to the authentication ID, the facial recognition unit 213 may register an authentication time, which is a time at which the facial recognition processing is performed, in the ID correspondence table 221. In a case where the facial recognition is failed, the facial recognition unit 213 may link information indicating that there is no matching person (e.g., "N/A (Not Applicable)") to the tracking ID linked to the facial image transmitted from the tracking unit 212, and may register it in the ID correspondence table 221.

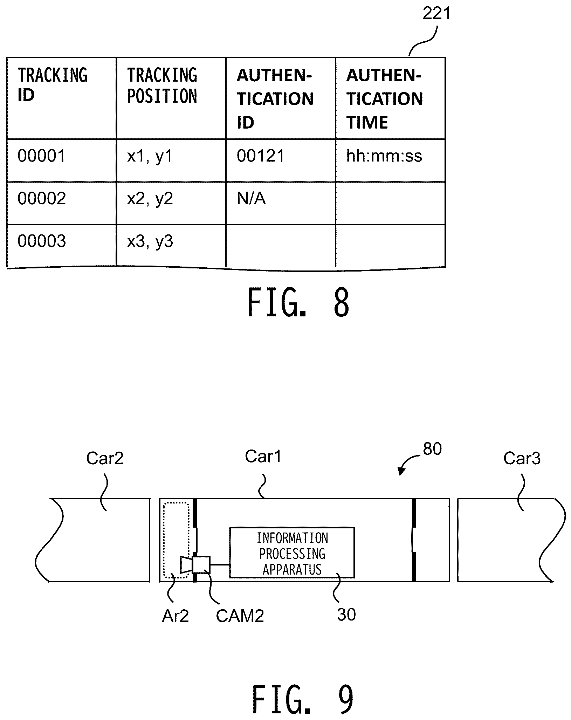

With reference to FIG. 8, the ID correspondence table 221 will be described. As illustrated in FIG. 8, the tracking ID, the tracking position (e.g., the position at the feet of the person P1), the authentication ID, and the authentication time may be linked with each other in the ID correspondence table 221. In a case where the tracking ID is linked with a specific authentication ID in the ID correspondence table 221, it indicates that a registrant corresponding to a person for whom the tracking ID is set is registered in the facial information DB 26. In a case where the tracking ID is linked with the character string "N/A", it indicates that a person corresponding to the person for whom the tracking ID is set is not registered in the facial information DB 26. In a case where the tracking ID is not linked with the authentication ID (i.e., in a case where a field of the authentication ID is blank), it indicates that the facial recognition processing has never been performed.

The tracking unit 212 may identify the person P1 included in the image IMG2, by using the image IMG2 and the image IMG1. Identifying the person P1 included in the image IMG2 is synonymous with establishing correspondence/mapping between the person P1 included in the image IMG1 and the person P1 included in the image IMG2. Therefore, at least one of a matching method and an optical flow method associated with the correspondence/mapping between images, is applicable to the identification of the person P1 included in the image IMG2. Since existing various aspects are applicable to each of the matching method and the optical flow method, a detailed description of each method is omitted.

In a case where the person P1 included in the image IMG2 is identified, the tracking unit 212 detects the head of the person P1. Based on the detected head of the person P1, the tracking unit 212 sets an area including the head of the person P1 as a tracking area TA2. Since the person P1 included in the image IMG1 and the person P1 included in the image IMG2 are the same person, the tracking ID of the person P1 related to the tracking area TA2 is the same as the tracking ID of the person P1 related to the tracking area TA1. The tracking unit 212 calculates the position of the person P1 based on the tracking area TA2.

The tracking unit 212 links the position of the person P1 to the tracking ID of the person P1 and registers it in the ID correspondence table 221. In this case, since the position of the person P1 calculated based on the tracking area TA1 is registered in the ID correspondence table 221, the position of the person P1 is updated by the tracking unit 212 registering the position of the person P1 calculated based on the tracking area TA2, in the ID correspondence table 221.

In a case where the tracking area TA2 is set, the tracking unit 212 determines whether or not the face of the person P1 is captured in the tracking area TA2. In other words, the tracking unit 212 performs the face detection on the tracking area TA2. In a case where it is determined that the face of the person P1 is captured in the tracking area TA2, the tracking unit 212 generates a facial image including the face area of the person P1. The tracking unit 212 links the generated facial image with the tracking ID of the person P1 and transmits it to the facial recognition unit 213. In a case where it is determined that the face of the person P1 is not captured in the tracking area TA2, the tracking unit 212 may not generate a facial image. Even when it is determined that the face of the person P1 is captured in the tracking area TA2, in a case where the tracking ID of the person P1 is linked with the authentication ID in the ID correspondence table 221 (i.e., in a case where the facial recognition is already successful), the tracking unit 212 may not generate a facial image.

The facial recognition unit 213 performs the facial recognition processing by using the facial image transmitted from the tracking unit 212. In a case where the facial recognition is successful, the facial recognition unit 213 links the authentication ID indicating the registrant registered in the facial information DB 26 corresponding to the person (here, the person P1) indicated by the facial image transmitted from the tracking unit 212, to the tracking ID linked to the facial image described above, and registers it in the ID correspondence table 221. In addition to the authentication ID, the facial recognition unit 213 may register the authentication time, which is a time at which the facial recognition processing is performed, in the ID correspondence table 221. In a case where the authentication time is already registered in the ID correspondence table 221 (i.e., in a case where the facial recognition was successful in the past), the facial recognition unit 213 may update the authentication time registered in the ID correspondence table 221. In a case where the facial recognition is failed, the facial recognition unit 213 may link the information indicating that there is no matching person (e.g., "N/A") to the tracking ID linked to the facial image transmitted from the tracking unit 212, and may register it in the ID correspondence table 221.

The tracking unit 212 may identify the person P1 included in the image IMG3 by using the image IMG3 and the image IMG2. In a case where the person P1 included in the image IMG3 is identified, the tracking unit 212 detects the head of the person P1. Based on the detected head of the person P1, the tracking unit 212 sets an area including the head of the person P1 as a tracking area TA3. Since the person P1 included in the image IMG2 and the person P1 included in the image IMG3 are the same person, the tracking ID of the person P1 related to the tracking area TA3 is the same as the tracking ID of the person P1 related to the tracking area TA2. The tracking unit 212 calculates the position of the person P1 based on the tracking area TA3.

The tracking unit 212 links the position of the person P1 to the tracking ID of the person P1 and registers it in the ID correspondence table 221. In this case, since the position of the person P1 calculated based on tracking area TA2 is registered in the ID correspondence table 221, the position of the person P1 is updated by the tracking unit 212 registering the position of the person P1 calculated based on tracking area TA3, in the ID correspondence table 221.

In a case where the tracking area TA3 is set, the tracking unit 212 determines whether or not the face of the person P1 is captured in the tracking area TA3. In other words, the tracking unit 212 performs the face detection on the tracking area TA3. In a case where it is determined that the face of the person P1 is captured in the tracking area TA3, the tracking unit 212 generates a facial image including the face area of the person P1. The tracking unit 212 links the generated facial image with the tracking ID of the person P1 and transmits it to the facial recognition unit 213. In a case where it is determined that the face of the person P1 is not captured in the tracking area TA3, the tracking unit 212 may not generate a facial image. Even when it is determined that the face of the person P1 is captured in the tracking area TA3, in a case where the tracking ID of the person P1 is linked with the authentication ID in the ID correspondence table 221 (i.e., in a case where the facial recognition is already successful), the tracking unit 212 may not generate a facial image.

The facial recognition unit 213 performs the facial recognition processing by using the facial image transmitted from the tracking unit 212. In a case where the facial recognition is successful, the facial recognition unit 213 links the authentication ID indicating the registrant registered in the facial information DB 26 corresponding to the person (here, the person P1) indicated by the facial image transmitted from the tracking unit 212, to the tracking ID linked to the facial image described above, and registers it in the ID correspondence table 221. In addition to the authentication ID, the facial recognition unit 213 may register the authentication time, which is a time at which the facial recognition processing is performed, in the ID correspondence table 221. In a case where the authentication time is already registered in the ID correspondence table 221 (i.e., in a case where the facial recognition was successful in the past), the facial recognition unit 213 may update the authentication time registered in the ID correspondence table 221. In a case where the facial recognition is failed, the facial recognition unit 213 may link the information indicating that there is no matching person (e.g., "N/A") to the tracking ID linked to the facial image transmitted from the tracking unit 212, and may register it in the ID correspondence table 221.

By the way, it may be difficult for the tracking unit 212 to continue tracking the person P1 due to the head of the person P1 being hidden by another person, for example. In a case where the tracking of the person P1 is interrupted, the tracking unit 212 may perform the following processing. After the tracking of the person P1 is interrupted, the tracking unit 212 may determine whether or not a new person is detected from the image acquired by the image acquisition unit 211 (e.g., the image captured by the camera CAM1). The "new person" means a person for whom the tracking ID is not set.

In a case where a new person is detected, the tracking unit 212 may determine whether or not the person P1 and the new person are the same person by comparing the feature quantities in the tracking area related to the person P1 (e.g., at least one of the tracking areas TA1, TA2, and TA3) with the feature quantities in the tracking area related to the new person. In a case where it is determined that the person P1 and the new person are the same person, the tracking unit 212 may set the tracking ID of the person P1 for the new person. As a result, the tracking unit 212 is allowed to track the person P1 again.

The feature quantities may be feature quantities related to the head of a person, feature quantities related to an upper body of the person, or feature quantities related to an entire body of the person. That is, the tracking area (e.g., at least one of the tracking areas TA1, TA2, and TA3) may include the head of the person, the upper body of the person, or the entire body of the person. The feature quantities may be obtained, for example, by using a Person Re-Identification technology.

The tracking unit 212 and the facial recognition unit 213 may repeat the aforementioned processing until the person P1 passes through the biometric authentication area Ar1. The tracking unit 212 and the facial recognition unit 213 may perform the aforementioned processing on all the authentication subjects passing through the biometric authentication area Ar1.

The determination unit 214 may acquire the authentication ID of a registrant corresponding to an authentication subject identified by the facial recognition unit 213, based on the ID correspondence table 221. The authentication subject identified by the facial recognition unit 213 means an authentication subject for whom a specific authentication ID is linked to the tracking ID in the ID correspondence table 221. In other words, the authentication subject identified by the facial recognition unit 213 means an authentication subject for whom the field of the authentication ID is not blank and the information indicating that there is no matching person (e.g., "N/A") is not registered in the field of the authentication ID, in the ID correspondence table 221.

Based on the acquired authentication ID (i.e., the authentication ID of the registrant corresponding to the authentication subject identified by the facial recognition unit 213), the determination unit 214 acquires, from the facial information DB 26, information linked to the acquired authentication ID (i.e., information related to the registrant corresponding to the authentication subject identified by the facial recognition unit 213).

The determination unit 214 determines whether or not the authentication subject is permitted to board the special car (e.g., the special car Carl), based on the information linked to the acquired authentication ID (the information related to the registrant corresponding to the authentication subject identified by the facial recognition unit 213).

For example, in a case where the ticket issuance information is linked to the authentication ID, the determination unit 214 may determine whether or not the authentication subject is permitted to board the special car Carl, based on the ticket issuance information. For example, in a case where the ticket issuance information indicates information related to a limited express train ticket for using the special car Car 1, the determination unit 214 may determine that the authentication subject is permitted to board the special car Car 1. On the other hand, in a case where the ticket issuance information indicates information related to a limited express train ticket that is different from the one for using the special car Carl, or in a case where the ticket issuance information indicates that the authentication subject does not have a limited express train ticket, the determination unit 214 may determine that the authentication subject is not permitted to board the special car Carl.

For example, in a case where the special car Carl is a non-reserved seat car (i.e., a car without reserved seats), a larger number of people than the number of seats in the special car Carl can board the special car Carl as long as they pay the special fee. For instance, in a case where the amount information is linked to the authentication ID, the determination unit 214 may determine whether or not the authentication subject is permitted to board the special car Carl, based on the amount information. For example, in a case where the amount of money indicated by the amount information is greater than or equal to the special fee, the determination unit 214 may determine that the authentication subject is permitted to board the special car Car 1. In a case where the special fee varies depending on a boarding section of the special car, the determination unit 214 may determine that the authentication subject is permitted to board the special car Car 1 when the amount of money indicated by the amount information is greater than or equal to the minimum amount of the special fee. On the other hand, in a case where the amount of money indicated by the amount information is less than the special fee, the determination unit 214 may determine that the authentication subject is not permitted to board the special car Carl.

The notification unit 215 may generate notification information indicating at least one of: an authentication subject having failed in the facial recognition (e.g., an authentication subject associated with the tracking ID linked to the character string "N/A"); and an authentication subject not subjected to the facial recognition (i.e., an authentication subject associated with the tracking ID in which the field of the authentication ID is blank in the ID correspondence table 221), for example, based on the ID correspondence table 221. The notification unit 215 may transmit the generated notification information to the output apparatus 25. As a result, the output apparatus 25 may notify, for example, a station staff of the station A that there is at least one of the authentication subject having failed in the facial recognition and the authentication subject not subjected to the facial recognition.

The notification unit 215 may generate notification information indicating an authentication subject who is not permitted to board the special car (e.g., the special car Carl), based on a determination result of the determination unit 214. The notification unit 215 may transmit the generated notification information to the output apparatus 25. As a result, the output apparatus 25 may notify, for example, the authentication subject that he/she is not permitted to board the special car. The output apparatus 25 may notify, for example, the station staff of the station A that there is the authentication subject who is not permitted to board the special car.

### (Technical Effect)

According to the information processing system 2, as in the information processing system 1 according to the first example embodiment described above, it is possible to prevent/control an increase in the boarding/alighting time for the special car. In addition, according to the information processing system 2, it is possible to reduce a burden on at least one of the station staff and the users of the special car. Furthermore, according to the information processing system 2, it is possible to prevent users having no limited express train tickets, from negligently or intentionally boarding the special car. Consequently, according to the information processing system 2, it is possible to appropriately collect the special fee from the users of the special car.

### <Third Example Embodiment>

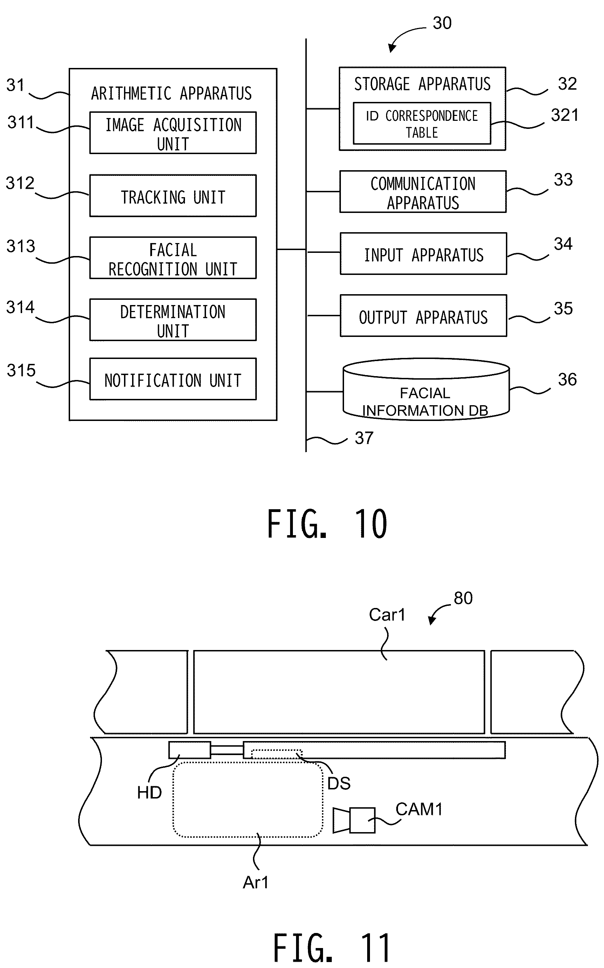

An information processing system, an information processing method, and a recording medium according to a third example embodiment will be described with reference to FIG. 9 and FIG. 10, in addition to FIG. 4 to FIG. 8. The following describes the information processing system, the information processing method, and the recording medium according to the third example embodiment, by using the information processing system 2. In the third example embodiment, a description that overlaps with those of the second example embodiment is omitted as appropriate.

In the third example embodiment, the information processing system 2 includes the station servers 41 and 42, the center server 50, the ticket issuance information DB 60, and the facial information DB 70. The information processing system 2 may include, for example, the information processing apparatus 20 installed at the station A. The information processing system 2 may include, for example, an information processing apparatus 30 installed on the train 80 (see FIG. 9). The information processing apparatus 30 may be connected to the network NW via a wireless base station (not illustrated).

As illustrated in FIG. 9, on the train 80, one end of the special car Carl is coupled to a car Car2, and the other end of the special car Carl is coupled to a car Car3. Here, the car Car 2 is assumed to be an ordinary car not requiring a special fee (in other words, a car that may be boarded with just a basic fare).

A biometric authentication area Ar2 may be set on a deck of the special car Car 1 on a side of the car Car 2. The deck of the special car Carl means a space inside the special car Carl including at least one of a boarding/alighting door of the special car Carl and a passageway that allows transit/passage between the special car Carl and the car Car2, wherein the space is distinct from a passenger compartment (i.e., a section including seats) of the special car Carl. Since the deck of the special car Car 1 on the car Car 2 side is located between the passenger compartment of special car Car 1 and the car Car 2, which is an ordinary car, it can be said that the deck is a boundary area between the special car and the ordinary car.

In a case where the special car Car has no deck (e.g., in a case where there is no partition door between the passenger compartment and the boarding/alighting door), the biometric authentication area Ar2 may be set around the boarding/alighting door of the special car Car. In a case where the special car Car has no deck, the biometric authentication area Ar2 may be set in the car Car 2 around the passageway that allows transit/passage between the special car Carl and the car Car2. Note that the car Car3 may be a special car or an ordinary car. In a case where the car Car3 is an ordinary car, a biometric authentication area may also be set, for example, on a deck of the special car Car 1 on a side of the car Car 3.

A camera CAM2 is installed/positioned to capture images of the biometric authentication area Ar2. The camera CAM2 may not be positioned such that the entire biometric authentication area Ar2 is included within its angle of view. In other words, the camera CAM2 may be positioned to capture images of at least a part of the biometric authentication area Ar2. The camera CAM2 may be installed at a position that does not obstruct the transit/passage of users of the train 80 (e.g., at a position higher than users' heads). The camera CAM2 may be a high-resolution camera, such as a 4K resolution camera. The special car Carl may additionally include another camera that is configured to capture images of the biometric authentication area Ar2, in addition to the camera CAM2.

An information processing apparatus 30 will be described with reference to FIG. 10. In FIG. 10, the information processing apparatus 30 includes an arithmetic unit 31, a storage unit 32, and a communication unit 33. The information processing apparatus 30 may further include an input apparatus 34 and an output apparatus 35. The information processing apparatus 30 may include a facial information database 36 (hereinafter referred to as a "facial information DB 36" as appropriate). The information processing apparatus 30 may not include at least one of the input apparatus 34 and the output apparatus 35. In the information processing apparatus 30, the arithmetic unit 31, the storage unit 32, the communication unit 33, the input apparatus 34, the output apparatus 35, and the facial information DB 36 may be connected via a data bus 37.

Incidentally, the facial information DB 36 may register/store the same information as that registered in the facial information DB 70. The facial information DB 36 may be updated at predetermined intervals to ensure that the information registered in the facial information DB 36 is the same as that registered in the facial information DB 70. The arithmetic unit 31, the storage unit 32, the communication unit 33, the input unit 34, and the output unit 35 may be respectively configured similarly to the arithmetic unit 21, the storage unit 22, the communication unit 23, the input unit 24, and the output unit 25 described above.

The arithmetic unit 31 may include an image acquisition unit 311, a tracking unit 312, a facial recognition unit 313, a determination unit 314, and a notification unit 315, as function blocks realized logically or as processing circuits realized physically.

At least one of the image acquisition unit 311, the tracking unit 312, the facial recognition unit 313, the determination unit 314, and the notification unit 315 may be realized in a form in which logical function blocks and physical processing circuits (i.e., hardware) are mixed. In a case where at least a part of the image acquisition unit 311, the tracking unit 312, the facial recognition unit 313, the determination unit 314, and the notification unit 315 is a function block, the at least a part of the image acquisition unit 311, the tracking unit 312, the facial recognition unit 313, the determination unit 314, and the notification unit 315 may be realized by the arithmetic apparatus 31 executing a predetermined computer program.

The arithmetic apparatus 31 may acquire (in other words, read) the predetermined computer program from the storage apparatus 32. The arithmetic apparatus 31 may also read the predetermined computer program stored on a computer-readable, non-transitory recording medium, by using a not-illustrated recording medium reading apparatus provided in the information processing apparatus 30. The arithmetic apparatus 31 may acquire (in other words, may download or read) the predetermined computer program from a not-illustrated apparatus external to the information processing apparatus 30 via the communication apparatus 33. As the recording medium that records therein the predetermined computer program to be executed by the arithmetic apparatus 31, at least one of an optical disk, a magnetic medium, a magneto-optical disk, a semiconductor memory, and any other medium configured to store a program may be used.

The image acquisition unit 311, the tracking unit 312, the facial recognition unit 313, the determination unit 314, and the notification unit 315 may be respectively configured similarly to the image acquisition unit 211, the tracking unit 212, the facial recognition unit 213, the determination unit 214, and the notification unit 215 described above.

### (Operation of Information Processing Apparatus)

The image acquisition unit 311 acquires an image including the biometric authentication area Ar2, which is captured by the camera CAM2. The tracking unit 312 performs tracking processing on one or more authentication subjects (in other words, users of the train 80) passing through the biometric authentication area Ar2, by using the image(s) acquired by the image acquisition unit 311. Furthermore, the facial recognition unit 313 performs facial recognition processing on one or more authentication subjects passing through the biometric authentication area Ar2, by using the image(s)acquired by the image acquisition unit 311.

The tracking processing performed by the tracking unit 312 and the face authentication processing performed by the facial recognition unit 313 are the same as the tracking processing performed by the aforementioned tracking unit 212 and the face authentication processing performed by the facial recognition unit 213, respectively. Therefore, a detailed description thereof will be omitted. The tracking unit 312 and the facial recognition unit 313 may repeat the tracking processing and the face authentication processing on one authentication subject, until the one authentication subject passes through the biometric authentication area Ar2.

A result of the tracking processing performed by the tracking unit 312 and a result of the face authentication processing performed by the facial recognition unit 313 may be registered in an ID correspondence table 321 stored in the storage apparatus 32. The ID correspondence table 321 may be the same as the ID correspondence table 221 described above. The ID correspondence table 321 may also include information registered in the ID correspondence table 221. Alternatively, the information processing apparatuses 20 and 30 may share the ID correspondence table 221. In this case, the ID correspondence table 221 may be stored in an apparatus that is different from the storage apparatus 22 (e.g., a cloud server, etc.). In this case, the information processing apparatus 30 may not perform the face authentication processing on an authentication subject having succeeded in the face authentication in the face authentication processing performed by the information processing apparatus 20.

The determination unit 314 may acquire the authentication ID of a registrant corresponding to an authentication subject identified by the facial recognition unit 313, based on the ID correspondence table 321. The authentication subject identified by the facial recognition unit 313 means an authentication subject for whom a specific authentication ID is linked to the tracking ID in the ID correspondence table 321. In other words, the authentication subject identified by the facial recognition unit 313 means an authentication subject for whom the field of the authentication ID is not blank and the information indicating that there is no matching person (e.g., "N/A") is not registered in the field of the authentication ID, in the ID correspondence table 321.

Based on the acquired authentication ID (i.e., the authentication ID of the registrant corresponding to the authentication subject identified by the facial recognition unit 313), the determination unit 314 acquires, from the facial information DB 36, information linked to the acquired authentication ID (i.e., information related to the registrant corresponding to the authentication subject identified by the facial recognition unit 313).

The determination unit 314 determines whether or not the authentication subject is permitted to board the special car (e.g., the special car Carl), based on the information linked to the acquired authentication ID (the information related to the registrant corresponding to the authentication subject identified by the facial recognition unit 313).

For example, in a case where the ticket issuance information is linked to the authentication ID, the determination unit 314 may determine whether or not the authentication subject is permitted to board the special car Carl, based on the ticket issuance information. For example, in a case where the ticket issuance information indicates information related to a limited express train ticket for using the special car Car 1, the determination unit 314 may determine that the authentication subject is permitted to board the special car Car 1. On the other hand, in a case where the ticket issuance information indicates information related to a limited express train ticket that is different from the one for using the special car Carl, or in a case where the ticket issuance information indicates that the authentication subject does not have a limited express train ticket, the determination unit 314 may determine that the authentication subject is not permitted to board the special car Carl.

For example, in a case where the special car Carl is a non-reserved seat car (i.e., a car without reserved seats), a larger number of people than the number of seats in the special car Carl can board the special car Carl as long as they pay the special fee. For instance, in a case where the amount information is linked to the authentication ID, the determination unit 314 may determine whether or not the authentication subject is permitted to board the special car Carl, based on the amount information. For example, in a case where the amount of money indicated by the amount information is greater than or equal to the special fee, the determination unit 314 may determine that the authentication subject is permitted to board the special car Car 1. In a case where the special fee varies depending on a boarding section of the special car, the determination unit 314 may determine that the authentication subject is permitted to board the special car Car 1 when the amount of money indicated by the amount information is greater than or equal to the minimum amount of the special fee. On the other hand, in a case where the amount of money indicated by the amount information is less than the special fee, the determination unit 314 may determine that the authentication subject is not permitted to board the special car Carl.

The notification unit 315 may generate notification information indicating an authentication subject who is not permitted to board the special car (e.g., the special car Carl), based on a determination result of the determination unit 314. The notification unit 315 may transmit the generated notification information to the output apparatus 35. As a result, the output apparatus 35 may notify, for example, the authentication subject that he/she is not permitted to board the special car (e.g., that he/she is not permitted to enter the passenger compartment of the special car). The output apparatus 35 may notify, for example, a crew member of the train 80 that there is the authentication subject who is not permitted to board the special car. The notification unit 315 may generate notification information indicating at least one of: an authentication subject having failed in the facial recognition (e.g., an authentication subject associated with the tracking ID linked to the character string "N/A"); and an authentication subject not subjected to the facial recognition (i.e., an authentication subject associated with the tracking ID in which the field of the authentication ID is blank in the ID correspondence table 321), for example, based on the ID correspondence table 321. The notification unit 315 may transmit the generated notification information to the output apparatus 35. As a result, the output apparatus 35 may notify, for example, a crew member of the train 80 that there is at least one of the authentication subject having failed in the facial recognition and the authentication subject not subjected to the facial recognition.

### (Technical Effect)

In a case where one platform (e.g., the platform Pf) is shared by the first train equipped with a special car requiring a special fee and the second train not requiring a special fee (in other words, a train that may be boarded with just a basic fare), for example, at least one of: a user not subjected to the facial recognition by the information processing apparatus 20; and an authentication subject subjected to the facial recognition by the information processing apparatus 20, but whose corresponding registrant is not identified (e.g., an authentication subject having failed in the facial recognition) may intentionally or negligently board the special car (e.g., the special car Carl), depending on platform status (e.g., congestion level).

In the third example embodiment, the facial recognition is performed inside the train 80 by the information processing apparatus 30, and it is determined whether or not an authentication subject (in other words, a user of the train 80) is permitted to board the special car Carl. Therefore, according to the information processing system 2 in the third example embodiment, for example, even if an authentication subject whose corresponding registrant is not identified in the facial recognition by the information processing apparatus 20) intentionally or negligently boards a special car (e.g., the special car Carl) at a station platform (e.g., the platform Pf), it is possible to prevent the authentication subject who is not permitted to board the special car from entering the passenger compartment of the special car.

In a case where a train (e.g., the train 80) includes a special car (e.g., the special car Carl) and an ordinary car (e.g., the car Car2), for example, there may be a person who boards the ordinary car at a station (e.g., the station A) and then moves inside the train to attempt unauthorized boarding of the special car. For example, as illustrated in FIG. 9, by setting the biometric authentication area Ar2 on the deck of the special car Carl on the car Car2 side (in other words, the boundary area between the special car Carl and the car Car2), it is possible to prevent the person attempting unauthorized boarding of the special car Carl from entering the passenger compartment of the special car Carl.

### <Fourth Example Embodiment>

An information processing system, an information processing method, and a recording medium according to a fourth example embodiment will be described. The following describes the information processing system, the information processing method, and the recording medium according to the fourth example embodiment, by using the information processing system 2. The fourth example embodiment is different from the second and third example embodiments described above, in that a biometric authentication area corresponding to the biometric authentication area Ar1 (see FIG. 1) is set at position that is different from the platform Pf. The fourth example embodiment may be the same as the second and third example embodiments in the other points. In the fourth example embodiment, a description that overlaps with those of the second and third example embodiments is omitted as appropriate.

In the fourth example embodiment, the biometric authentication area corresponding to the biometric authentication area Ar1 may be set in a ticket gate area of a station (e.g., the station A). Hereinafter, the biometric authentication area set in the ticket gate area will be referred to as a "biometric authentication area Ar3".

The image acquisition unit 211 of the information processing apparatus 20 acquires a first image including the biometric authentication area Ar3. The tracking unit 212 of the information processing apparatus 20 performs the tracking processing on one or more authentication subjects (i.e., station users) passing through the biometric authentication area Ar3, by using the first image acquired by the image acquisition unit 211. Furthermore, the facial recognition unit 213 of the information processing apparatus 20 performs the face authentication processing on one or more authentication subjects passing through the biometric authentication area Ar3, by using the first image acquired by the image acquisition unit 211. The tracking unit 212 and the facial recognition unit 213 may repeat the tracking processing and the face authentication processing on one authentication subject, until that the one authentication subject passes through the biometric authentication area Ar3.

The determination unit 214 may acquire the authentication ID of a registrant corresponding to an authentication subject identified by the facial recognition unit 213, based on the ID correspondence table 221. Based on the acquired authentication ID (i.e., the authentication ID of the registrant corresponding to the authentication subject identified by the facial recognition unit 213), the determination unit 214 acquires, from the facial information DB 26, information linked to the acquired authentication ID (i.e., information related to the registrant corresponding to the authentication subject identified by the facial recognition unit 213).

The determination unit 214 determines whether or not the authentication subject is permitted to board the special car (e.g., the special car Carl), based on the information linked to the acquired authentication ID (the information related to the registrant corresponding to the authentication subject identified by the facial recognition unit 213).

At the station (e.g., the station A), there is installed one or more cameras that are configured to capture images of at least a part of a space from the ticket gate area provided with the biometric authentication area Ar3 to a platform (e.g., the platform Pf) used for boarding and alighting from a train (e.g., the train 80) equipped with a special car (e.g., the special car Carl). The aforementioned space may include at least one of passageways, stairs, escalators, elevators, and concourses inside the station.

The image acquisition unit 211 acquires a second image including the at least a part of the space, which is captured by at least one of the aforementioned one or more cameras. The tracking unit 212 performs the tracking processing on one or more authentication subjects moving inside the station, by using the second image acquired by the image acquisition unit 211. The tracking unit 212 may perform the tracking processing only on an authentication subject who is determined to be permitted to board the special car (e.g., the special car Carl) by the determination unit 214.

Note that information indicating the determination result of the determination unit 214 may be registered in the ID correspondence table 221. For example, the determination unit 214 may link information indicating that boarding the special car is permitted, to the tracking ID of the authentication subject who is determined to be permitted to board the special car (e.g., the special car Carl), and may register it in the ID correspondence table 221. The tracking unit 212 may identify the authenticated user who is determined to be permitted to board the special car (e.g., the special car Carl) by the determination unit 214, based on the information indicating that boarding the special car is permitted, which is registered in the ID correspondence table 221.

The notification unit 215 may generate notification information indicating a correct boarding position, for example, in a case where the authenticated user who is determined to be permitted to board the special car (e.g., the special car Carl) by the determination unit 214 is heading to a location that is different from a boarding position of the special car. The notification unit 215 may transmit the generated notification information to the output apparatus 25. As a result, the output apparatus 25 may notify the authentication subject, for example, of the boarding position of the special car.

The notification unit 215 may generate notification information indicating that boarding the special car is not permitted, for example, in a case where an authentication subject who is determined not to be permitted to board the special car by the determination unit 214 approaches the special car. The notification unit 215 may transmit the generated notification information to the output apparatus 25. As a result, the output apparatus 25 may notify the authentication subject that he/she is not permitted to board the special car. The output apparatus 25 may notify a station staff of the station (e.g., the station A) that there is the authentication subject who is not permitted to board the special car.

The image acquisition unit 311 of the information processing apparatus 30 acquires an image including the biometric authentication area Ar2, which is captured by the camera CAM2. The tracking unit 312 of the information processing apparatus 30 performs the tracking processing on one or more authentication subjects (i.e., users of the train 80) passing through the biometric authentication area Ar2, by using the image acquired by the image acquisition unit 311. Furthermore, the facial recognition unit 313 of the information processing apparatus 30 performs the facial recognition processing on one or more authentication subjects passing through the biometric authentication area Ar2, by using the image acquired by the image acquisition unit 311.

The determination unit 314 of the information processing apparatus 30 may acquire the authentication ID of a registrant corresponding to an authentication subject identified by the facial recognition unit 313, based on the ID correspondence table 321. Based on the acquired authentication ID (i.e., the authentication ID of the registrant corresponding to the authentication subject identified by the facial recognition unit 313), the determination unit 314 acquires, from the facial information DB 36, information linked to the acquired authentication ID (i.e., information related to the registrant corresponding to the authentication subject identified by the facial recognition unit 313).

The determination unit 314 determines whether or not the authentication subject is permitted to board the special car (e.g., the special car Carl), based on the information linked to the acquired authentication ID (the information related to the registrant corresponding to the authentication subject identified by the facial recognition unit 313).

### (Technical Effect)

According to the information processing system 2 in the fourth example embodiment, it is possible to prevent authentication subjects having no limited express train tickets, from negligently or intentionally boarding the special car, even if the information processing apparatus 20 performs the facial recognition on authentication subjects and determines whether or not the authentication subjects are permitted to board the special car, based on an image including a location (e.g., the biometric authentication area Ar3) that is different from a platform (e.g., the platform Pf) used for boarding and alighting from a train (e.g., the train 80) equipped with a special car (e.g., the special car Car 1).

For example, by setting the biometric authentication area Ar3 in a ticket gate area of a station (e.g., the station A), the information processing apparatus 20 is allowed to detect entry/exit of station users by using the facial recognition based on an image(s) including the biometric authentication area Ar3, and is also allowed to determine whether or not users having entered the station are permitted to board the special car. That is, it is not necessary to install both an apparatus that detects the entry/exit of station users using the facial recognition and the information processing apparatus 20 at one station (e.g., the station A).

### <Fifth Example Embodiment>

An information processing system, an information processing method, and a recording medium according to a fifth example embodiment will be described with reference to FIG. 11. The following describes the information processing system, the information processing method, and the recording medium according to the fifth example embodiment, by using the information processing system 2. The fifth example embodiment is different from the second and third example embodiments described above, in that a platform screen door is installed on the platform Pf. The fifth example embodiment may be the same as the second and third example embodiments in the other points. In the fifth example embodiment, a description that overlaps with those of the second and third example embodiments is omitted as appropriate. In the fifth example embodiment, the ticket issuance information is assumed to be included in the facial information DBs 26 and 70.

As illustrated in FIG. 11, a platform screen door HD is installed in a part corresponding to a stopping position of the special car Carl on the platform Pf. The platform screen door HD is provided with a digital signage DS serving as the output apparatus 25 of the information processing apparatus 20. Note that a platform screen door may also be installed in a part other than the stopping position of the special car Carl on the platform P.

The determination unit 214 of the information processing apparatus 20 may acquire the authentication ID of a registrant corresponding to an authentication subject identified by the facial recognition unit 213, based on the ID correspondence table 221. Based on the acquired authentication ID (i.e., the authentication ID of the registrant corresponding to the authentication subject identified by the facial recognition unit 213), the determination unit 214 acquires the ticket issuance information linked to the acquired authentication ID, from the facial information DB 26.

Based on the acquired ticket issuance information, the determination unit 214 determines whether or not the authentication subject is permitted to board the special car Car 1. For example, in a case where the ticket issuance information indicates information related to a limited express train ticket for using the special car Carl, and in a case where the train 80 equipped with the special car Carl is stopped at the platform Pf, or the train 80 arrives at the platform Pf before another train, the determination unit 214 may determine that the aforementioned authentication subject is permitted to board the special car Carl.

For example, in a case where the ticket issuance information indicates the information related to a limited express train ticket for using the special car Carl, but the train 80 equipped with the special car Carl arrives at the platform Pf later than another train, the determination unit 214 may determine that the aforementioned authentication subject is permitted to board the special car Carl, and may also determine that there is a train arriving at the platform Pf before the train 80.

For example, in a case where the ticket issuance information indicates that the authentication subject does not have a limited express train ticket, the determination unit 214 may determine that the authentication subject is not permitted to board the special car (e.g., the special car Carl).

The notification unit 215 may generate the notification information based on the determination result of the determination unit 214. In a case where the determination result of the determination unit 214 indicates that "the authentication subject is permitted to board the special car Carl," the notification unit 215 may generate, for example, notification information indicating that "boarding is permitted." In this case, the notification unit 215 may transmit the notification information indicating that "boarding is permitted" to the output apparatus 25. As a result, for example, at least one of text, graphics, and images indicating that boarding is permitted, may be displayed on the digital signage DS.

In a case where the determination result of the determination unit 214 indicates that "the authentication subject is permitted to board the special car Carl, but there is a train arriving at the platform Pf before the train 80," the notification unit 215 may generate, for example, notification information indicating that "there is a train arriving before the train that boarding is permitted." In this case, the notification unit 215 may transmit the notification information indicating that "there is a train arriving before the train that boarding is permitted" to the output apparatus 25. As a result, a message such as "Please wait a moment until your train arrives," may be displayed on the digital signage DS.

In a case where the determination result of the determination unit 214 indicates that "the authentication subject is not permitted to board the special car," the notification unit 215 may generate, for example, notification information indicating "boarding is not permitted." In this case, the notification unit 215 may transmit the notification information indicating "boarding is not permitted" to the output apparatus 25. As a result, for example, at least one of text, graphics, and images indicating that boarding is not permitted, and a message such as "You need to purchase a limited express train ticket for boarding", may be displayed on the digital signage DS. In this case, an audible warning may also be emitted in addition to the display.

### (Technical Effect)

According to the information processing system 2 in the fifth example embodiment, for example, it is possible to prevent users having no limited express train tickets, from negligently or intentionally boarding the special car (e.g., special car Car 1). Consequently, according to the information processing system 2, it is possible to appropriately collect the special fee from the users of the special car.

### (Modified Example)

On the platform Pf, a plurality of biometric authentication areas respectively corresponding to stopping positions of two or more special cars may be set.

The determination unit 214 acquires the ticket issuance information linked to the authentication ID of the registrant corresponding to the authentication subject identified by the facial recognition unit 213 performing the facial recognition, based on the ID correspondence table 221 and the facial information DB 26. The determination unit 214 acquires information indicating the position of the authentication subject (e.g., the "tracking position" included in the ID correspondence table 221), based on the ID correspondence table 221.

The determination unit 214 may determine whether or not the authentication subject (in other words, the registrant identified by the facial recognition unit 213) is permitted to board one special car (e.g., the special car Carl), based on the acquired ticket issuance information, the acquired information indicating the position of the authentication subject, and operation information on the special car.

For example, in a case where (i) the ticket issuance information indicates information related to a limited express train ticket for using the one special car, and (ii) one train equipped with the one special car is stopped at the platform Pf, or arrives at the platform Pf before another train, and (iii) the position of the authentication subject is in the vicinity of a boarding position for the one special car, the determination unit 214 may determine that the aforementioned authentication subject is permitted to board the one special car.

In this case, the notification unit 215 may generate, for example, notification information indicating that "boarding is permitted." In this case, the notification unit 215 may transmit the notification information indicating that "boarding is permitted" to the output apparatus 25. As a result, for example, at least one of text, graphics, and images indicating that boarding is permitted, may be displayed on a digital signage (e.g., the digital signage DS).

For example, in a case where (i) the ticket issuance information indicates information related to a limited express train ticket for using the one special car, and (ii) one train equipped with the one special car is stopped at the platform Pf, or arrives at the platform Pf before another train, and (iii) the position of the authentication subject is away from the boarding position for the one special car (e.g., the authentication subject is at a wrong boarding position), the determination unit 214 may determine that the authentication subject is board the one special car, but is at the wrong boarding position.

In this case, the notification unit 215 may change notification content, based on a current time and an arrival time of the one train equipped with the one special car.

For example, in a case where a difference between the current time and the arrival time is shorter than a predetermined time, the notification unit 215 may generate, for example, notification information indicating that "boarding is permitted" and "moving to a car X." In this case, the notification unit 215 may transmit the notification information indicating that "boarding is permitted" and "moving to a car X", to the output apparatus 25. As a result, for example, at least one of text, graphics, and images indicating that boarding is permitted, and a message such as "Please move to the car X after boarding", may be displayed on the digital signage (e.g., the digital signage DS).

For example, in a case where the difference between the current time and the arrival time is longer than the predetermined time, the notification unit 215 may generate, for example, notification information indicating that "boarding is not permitted" and "moving to a car X". In this case, the notification unit 215 may transmit the notification information indicating that "boarding is not permitted" and "moving to a car X", to the output apparatus 25. As a result, for example, at least one of text, graphics, and images indicating that boarding is not permitted, and a message such as "Please move to the boarding position for the car X", may be displayed on the digital signage (e.g., the digital signage DS).

### <Sixth Example Embodiment>

An information processing system, an information processing method, and a recording medium according to a sixth example embodiment will be described. The following describes the information processing system, the information processing method, and the recording medium according to the sixth example embodiment, by using the information processing system 2. The sixth example embodiment is different from the second to fifth example embodiments described above, in that the notification method varies depending on the type of a limited express train ticket. The sixth example embodiment may be the same as the second through fifth example embodiments in the other points. In the sixth example embodiment, a description that overlaps with those of the second to fifth example embodiments is omitted as appropriate. In the sixth example embodiment, the ticket issuance information is assumed to be included in the facial information DBs 26, 36, and 70.

The determination unit 314 of the information processing apparatus 30 may acquire the authentication ID of a registrant corresponding to an authentication subject identified by the facial recognition unit 313, based on the ID correspondence table 221. Based on the acquired authentication ID (i.e., the authentication ID of the registrant corresponding to the authentication subject identified by the facial recognition unit 313), the determination unit 314 acquires the ticket issuance information linked to the acquired authentication ID, from the facial information DB 36.

Based on the acquired ticket issuance information, the determination unit 314 determines whether or not the authentication subject is permitted to board the special car Car 1. For example, in a case where the ticket issuance information indicates that the authentication subject does not have a limited express train ticket, the determination unit 314 may determine that the authentication subject is not permitted to board the special car (e.g., the special car Carl).

In this case, the notification unit 315 may generate, for example, notification information indicating that "boarding is not permitted." The notification unit 315 may transmit the notification information indicating that "boarding is not permitted" to a control apparatus of the train 80 via the communication apparatus 33. In this case, the control apparatus of the train 80 may close a door of the passenger compartment of the special car Carl (in other words, may prevent the door of the passenger compartment from opening) such that the authentication subject does not enter the passenger compartment. In a case where the determination result of the determination unit 314 indicates that "the authentication subject is permitted to board the special car Carl," the notification unit 315 may not generate the notification information.

Thus, by restricting the opening/closing of the door of the passenger compartment of the special car depending on the determination result regarding whether or not the authentication subject is permitted to board the special car (e.g., the special car Carl), it is possible to prevent users having no limited express train tickets, from negligently or intentionally boarding the special car (e.g., the special car Carl).

For example, suppose that the train 80 includes reserved-seat cars (i.e., cars with reserved seats) serving as the special car, and non-reserved seat cars (i.e., cars without reserved seats). For instance, in a case where the ticket issuance information indicates information related to a limited express train ticket for using a non-reserved seat car and an authentication subject is attempting to enter a reserved-seat car, the determination unit 314 may determine that the authentication subject is not permitted to enter the reserved-seat car.

In this case, the notification unit 315 may generate, for example, notification information indicating that "entry is not permitted." The notification unit 315 may transmit the notification information indicating that "entry is not permitted" to the output apparatus 25. As a result, at least one of a message such as, for example, "You are not allowed to use a reserved seat with a non-reserved seat express ticket" and an audible warning may be emitted.

For example, in a case where the ticket issuance information indicates information related to a limited express train ticket for using one reserved-seat car, and in a case where a car that the authentication subject is attempting to enter is another reserved-seat car that is different from the one reserved-seat car, the determination unit 314 may determine that this authentication subject is permitted to enter another reserved-seat car, but that it is a different boarding car.

In this case, the notification unit 315 may generate, for example, notification information indicating that "entry is permitted" and "moving to a car X." The notification unit 315 may transmit the notification information indicating that "entry is permitted" and "moving to a car X", to the output apparatus 25. As a result, at least one of a message such as, for example, "This car is not the car X" and an audible warning may be emitted.

In a case where the ticket issuance information indicates information related to a limited express train ticket for using one reserved-seat car, and in a case where a car that the authentication subject is attempting to enter is the one reserved-seat car, the determination unit 314 may determine that this authentication subject is permitted to enter the one reserved-seat car. In this case, the notification unit 315 need not generate the notification information.

### (Technical Effect)

According to the information processing system 2 in the sixth example embodiment, it is possible to take appropriate measures depending on the type of limited express train tickets held by users of the special car (e.g., the special car Carl), and it is possible to prevent those having no limited express train tickets from entering the passenger compartment of the special car.

### <Seventh Example Embodiment>

An information processing system, an information processing method, and a recording medium according to a seventh example embodiment will be described. The following describes the information processing system, the information processing method, and the recording medium according to the seventh example embodiment, by using the information processing system 2. The seventh example embodiment is different from the second to sixth example embodiments described above, in that an unmanned moving body (e.g., at least one of a robot and a drone) equipped with a camera is installed at least some stations (e.g., stations where a special car(s) stops). The seventh example embodiment may be the same the second to sixth example embodiments in the other points. In the seventh example embodiment, a description that overlaps with those of the second to sixth example embodiments is omitted as appropriate.

In the seventh example embodiment, an authentication subject having failed in the facial recognition (e.g., an authentication subject associated with the tracking ID linked to the character string "N/A" in at least one of the ID correspondence tables 221 and 321) is referred to as a "non-registrant." Furthermore, an authentication subject not subjected to the facial recognition (i.e., an authentication subject associated with the tracking ID in which the field of the authentication ID is blank in at least one of the ID correspondence tables 221 and 321) is referred to as an "unauthenticated person."

As described in the second example embodiment above, the notification unit 215 of the information processing apparatus 20 may generate notification information indicating at least one of the non-registrant and the unauthenticated person. By the notification information being transmitted to the output apparatus 25, a station staff may be notified that there is at least one of the non-registrant and the unauthenticated person. Furthermore, as described in the third example embodiment above, the notification unit 315 of the information processing apparatus 30 may generate notification information indicating at least one of the non-registrant and the unauthenticated person. By the notification information being transmitted to the output apparatus 35, a crew member of a train (e.g., the train 80) may be notified that there is at least one of the non-registrant and the unauthenticated person.

However, before the station staff responds, at least one of the non-registrant and the unauthenticated person may board a special car (e.g., the special car Car 1). Furthermore, before the train crew responds, at least one of the non-registrant and the unauthenticated person may alight from the special car. For example, on a train in which all cars in a train formation are special cars, the non-registrant and the unauthenticated person may stay on the deck of the special car, thereby staying the train.

Note that by the information processing apparatus 30 performing the facial recognition while the unauthenticated person stays on the deck of the special car, and determining that boarding the special car is permitted, the unauthenticated person is then allowed to enter the passenger compartment of the special car.

In the seventh example embodiment, the notification unit 315 of the information processing apparatus 30 may transmit the notification information indicating at least one of the non-registrant and the unauthenticated person, to a station server (e.g., the station server 42, etc.) of a station where the train 80 will stop, in addition to the output apparatus 35.

One station server having received the notification information, may control an unmanned moving body (e.g., at least one of a robot and a drone) equipped with a camera, so as to move to the stopping position of the special car (e.g., the special car Carl) on a platform used for boarding and alighting from the train 80. The camera of the unmanned moving body may capture an image of a person alighting from the special car. The unmanned moving body may transmit the image captured by the camera to the one station server. The one station server may transmit the image captured by the camera of the unmanned moving body to an information processing apparatus 20a corresponding to the information processing apparatus 20.

Here, for the non-registrant, a facial image is generated by the tracking unit 212 of the information processing apparatus 20. The information processing apparatus 20 may transmit the facial image of the non-registrant to all station servers, for example, via the center server 50. The information processing apparatus 20a may perform the facial recognition using the image captured by the camera of the unmanned moving body and the facial image of the non-registrant transmitted from the information processing apparatus 20, thereby identifying the non-registrant from the image captured by the camera of the unmanned moving body.

One station server may control the unmanned moving body to guide the non-registrant identified by the information processing apparatus 20a, for example, to the nearest fare adjustment machine. In this case, the one station server may control the fare adjustment machine such that at least a part of the fare adjustment machine emits light of a predetermined color. Furthermore, the one station server may control the unmanned moving body such that at least a part of the unmanned moving body emits light of the predetermined color (i.e., the same color as that of the light emitted from the fare adjustment machine), or may control the unmanned moving body to display text/characters or images indicating the color of the light emitted from the fare adjustment machine, or to emit a sound/audio.

In a case where a platform screen door is installed on the platform used for boarding and alighting from train 80 at a station where the one station server is installed, the one station server may control a notification apparatus (e.g., the digital signage DS illustrated in FIG. 11) provided in the platform screen door so as to display text/characters or images indicating the color of the light emitted from the fare adjustment machine, or to emit a sound/audio, in addition to or instead of the unmanned moving body.

In a case where a non-registrant operates the fare adjustment machine, one station server may control the fare adjustment machine to display a predetermined information input screen to prompt the non-registrant to input information required for the facial recognition. In this case, the one station server may acquire information related to a payment method used by the non-registrant to pay a railway usage fee, as settlement information related to the non-registrant. Since the tracking unit 212 of the information processing apparatus 20 generates the facial image of the non-registrant, a station where the non-registrant boards the train (e.g., the train 80) equipped with the special car (e.g., the special car Car 1) is identified. Therefore, the information processing system 2 is allowed to appropriately calculate the railway usage fee of the non-registrant.

The information processing apparatus 20a may perform the facial recognition on the unauthenticated person, by using the image captured by the camera of the unmanned moving body. In a case where the facial recognition performed on the unauthenticated person by the information processing apparatus 20a is successful, for example, the center server 50 may settle the railway usage fee by using the settlement information linked to the authentication ID of a registrant corresponding to the uncertified individual.

As described in the second example embodiment above, for example, the tracking unit 212 may determine whether or not one person and another person are the same person, based on the feature quantities in a tracking area related to the person (e.g., at least one of the tracking areas TA1, TA2, and TA3). For example, by sharing information indicating the feature quantities in the tracking area related to the person with all the information processing apparatuses (e.g., the information processing apparatuses 20 and 30), it is possible to identify a station where the unauthenticated person boards a train (e.g., the train 80) equipped with a special car (e.g., the special car Car 1) and the special car that the unauthenticated person boards. Therefore, in a case where the facial recognition performed on the unauthenticated person by the information processing apparatus 20a is successful, for example, the center server 50 is allowed to appropriately calculate the railway usage fee of the unauthenticated person.

In a case where the facial recognition performed on the unauthenticated person is not successful, even using the image captured by the camera of the unmanned moving body, one station server may control the unmanned moving body, for example, to guide the unauthenticated person to a station staff waiting area. In this case, the information processing apparatus 20a may register the feature quantities in the tracking area related to the unauthenticated person, for example, in a database for registering information related to persons of interest or persons on a blacklist.

In a case where the facial recognition is used to detect the entry/exit of users (i.e., the facial recognition is performed in the ticket gate area) at the station where one station server is installed, and in a case where the facial recognition performed on the unauthenticated person using the image captured by the camera of the unmanned moving body is not successful, the facial recognition may be performed again on the un unauthenticated person in the ticket gate area. In a case where the facial recognition performed on the unauthenticated person is not successful even in the ticket gate area, for example, one station server may register the feature quantities in the tracking area related to the unauthenticated person, for example, in a database for registering information related to persons of interest or persons on a blacklist.

### (Technical Effect)

According to the information processing system 2 in the seventh example embodiment, it is possible to appropriately collect the special fee from the users of the special car.

### <Supplementary Notes>

With respect to the example embodiment described above, the following Supplementary Notes are further disclosed.

### (Supplementary Note 1)

An information processing system including:
a first image acquisition unit that acquires a first image including a biometric authentication area, which is set at a station where one platform is used by a first train equipped with a special car requiring a special fee and a second train not requiring the special fee;
a first biometric authentication unit that performs biometric authentication on an authentication subject included in the first image, based on the first image; and
a first determination unit that determines whether or not the authentication subject is permitted to board the special car, based on information related to a registrant corresponding to the authentication subject who is identified by the first biometric authentication unit performing the biometric authentication.

### (Supplementary Note 2)

The information processing system according to Supplementary Note 1, including:
a tracking unit that tracks the authentication subject at the station, wherein
the first determination unit determines whether or not the authentication subject is permitted to board the special car, based on information related to a registrant corresponding to the authentication subject who is tracked by the tracking unit and who is identified by the first biometric authentication unit performing the biometric authentication.

### (Supplementary Note 3)

The information processing system according to Supplementary Note 1 or 2, including:
a second image acquisition unit that acquires a second image including a part of interior of the first train;
a second biometric authentication unit that performs biometric authentication on the authentication subject, based on the second image; and
a second determination unit that determines whether or not the authentication subject is permitted to board the special car, based on information related to a registrant corresponding to the authentication subject who is identified by the second biometric authentication unit performing the biometric authentication.

### (Supplementary Note 4)

The information processing system according to Supplementary Note 3, wherein
the first train includes the special car and an ordinary car not requiring the special fee, and
the part of the interior of the first train includes a boundary area between the special car and the ordinary car.

### (Supplementary Note 5)

The information processing system according to any one of Supplementary Notes 1 to 4, wherein the information related to the registrant includes ticket information related to a ticket for the special car.

### (Supplementary Note 6)

The information processing system according to any one of Supplementary Notes 1 to 5, wherein the information related to the registrant includes amount information indicating an amount of money that may be used to pay a railway usage fee including the special fee and indicating an amount of money that is deposited in advance

### (Supplementary Note 7)

An information processing method including:
acquiring a first image including a biometric authentication area, which is set at a station where one platform is used by a first train equipped with a special car requiring a special fee and a second train not requiring the special fee;
performing biometric authentication on an authentication subject included in the first image, based on the first image; and
determining whether or not the authentication subject is permitted to board the special car, based on information related to a registrant corresponding to the authentication subject who is identified by the biometric authentication being performed.

### (Supplementary Note 8)

A recording medium on which a computer program that allows a computer to execute an information processing method is recorded, the information processing method including:
acquiring a first image including a biometric authentication area, which is set at a station where one platform is used by a first train equipped with a special car requiring a special fee and a second train not requiring the special fee;
performing biometric authentication on an authentication subject included in the first image, based on the first image; and
determining whether or not the authentication subject is permitted to board the special car, based on information related to a registrant corresponding to the authentication subject who is identified by the biometric authentication being performed.

The present disclosure is permitted to be changed, if desired, without departing from the essence or spirit of this disclosure which can be read from the claims and the entire specification. An information processing system, an information processing method, and a recording medium with such changes are also intended to be within the technical scope of the present disclosure.

### Description of Reference Codes

1, 2 Information processing system
10, 20, 30 Information processing apparatus
11, 211, 311 Image acquisition unit
12 Biometric authentication unit
13, 214, 314 Determination unit
14 Biometric information database
26, 36, 70 Facial information database
212, 312 Tracking unit
213, 313 Facial recognition unit
215, 315 Notification unit

## Claims

1. An information processing system comprising:
a first image acquisition unit that acquires a first image including a biometric authentication area, which is set at a station where one platform is used by a first train equipped with a special car requiring a special fee and a second train not requiring the special fee;
a first biometric authentication unit that performs biometric authentication on an authentication subject included in the first image, based on the first image; and
a first determination unit that determines whether or not the authentication subject is permitted to board the special car, based on information related to a registrant corresponding to the authentication subject who is identified by the first biometric authentication unit performing the biometric authentication.

2. The information processing system according to claim 1, comprising:
a tracking unit that tracks the authentication subject at the station, wherein
the first determination unit determines whether or not the authentication subject is permitted to board the special car, based on information related to a registrant corresponding to the authentication subject who is tracked by the tracking unit and who is identified by the first biometric authentication unit performing the biometric authentication.

3. The information processing system according to claim 1 or 2, comprising:
a second image acquisition unit that acquires a second image including a part of interior of the first train;
a second biometric authentication unit that performs biometric authentication on the authentication subject, based on the second image; and
a second determination unit that determines whether or not the authentication subject is permitted to board the special car, based on information related to a registrant corresponding to the authentication subject who is identified by the second biometric authentication unit performing the biometric authentication.

4. The information processing system according to claim 3, wherein
the first train includes the special car and an ordinary car not requiring the special fee, and
the part of the interior of the first train includes a boundary area between the special car and the ordinary car.

5. The information processing system according to any one of claims 1 to 4, wherein the information related to the registrant includes ticket information related to a ticket for the special car.

6. The information processing system according to any one of claims 1 to 5, wherein the information related to the registrant includes amount information indicating an amount of money that may be used to pay a railway usage fee including the special fee and indicating an amount of money that is deposited in advance

7. An information processing method comprising:
acquiring a first image including a biometric authentication area, which is set at a station where one platform is used by a first train equipped with a special car requiring a special fee and a second train not requiring the special fee;
performing biometric authentication on an authentication subject included in the first image, based on the first image; and
determining whether or not the authentication subject is permitted to board the special car, based on information related to a registrant corresponding to the authentication subject who is identified by the biometric authentication being performed.

8. A recording medium on which a computer program that allows a computer to execute an information processing method is recorded, the information processing method including:
acquiring a first image including a biometric authentication area, which is set at a station where one platform is used by a first train equipped with a special car requiring a special fee and a second train not requiring the special fee;
performing biometric authentication on an authentication subject included in the first image, based on the first image; and
determining whether or not the authentication subject is permitted to board the special car, based on information related to a registrant corresponding to the authentication subject who is identified by the biometric authentication being performed.
